# EUROPÄISCHE PATENTANMELDUNG

(11) **EP 2 280 325 A2**
(43) Veröffentlichungstag der Anmeldung: **02.02.2011**
(21) Anmeldenummer: 10007476.4
(22) Anmeldetag: 20.07.2010
(51) Int. Cl.: G05B 19/042

(54) **Busfähiges Steuerungsgerät zur Steuerung mindestens eines Verbrauchers**

(30) Priorität: 28.07.2009 DE 102009035069; 10.10.2009 DE 102009048935
(71) Anmelder: ABB AG, 68309 Mannheim (DE)
(72) Erfinder: Heilig, Peter, Dipl.-Ing., 69121 Heidelberg (DE); Schmitz, Gerald, Dipl.-Ing., 69250 Schönau (DE); Schramm, Robert, Dipl.-Ing., 76756 Bellheim (DE)

(57) **Zusammenfassung**

Die Erfindung betrifft ein busfähiges Steuerungsgerät (1) zur Steuerung mindestens eines Verbrauchers (2) in einer busorientierten programmierbaren Elektroinstallation, mit einer Busanschlusseinrichtung (3) zum Anschluss des Steuergerätes (1) an ein Bussystem (4), und mit einer Steuerungseinrichtung (5) zum Steuern des an das Steuerungsgerät (1) angeschlossenen Verbrauchers (2). Das Steuerungsgerät (1) umfasst eine Erfassungseinrichtung (6) zum Erfassen von Strom und Spannung des Verbrauchers (2) sowie eine Auswerteeinheit (7) zur Verarbeitung der erfassten Strom- und Spannungswerte oder zur Ermittlung von Kennwerten aus den erfassten Strom- und Spannungswerten.

Die Erfindung betrifft weiter ein Verfahren zur Steuerung wenigstens eines Verbrauchers (2, 2') in einer busorientierten programmierbaren Elektroinstallation, wobei wenigstens ein busfähiges Steuerungsgerät (1) mit einer Busanschlusseinrichtung (3) an ein Bussystem (4) angeschlossen ist, wobei wenigsten ein Verbraucher (2, 2') an das busfähige Steuerungsgerät (1) angeschlossen ist, wobei in dem busfähigen Steuerungsgerät (1) mit einer Erfassungseinrichtung (6) Strom und Spannung wenigstens eines Verbrauchers (2, 2') erfasst und verarbeitet werden, und wobei vorwählbare Kennwerte aus den verarbeiteten Strom- und Spannungswerten ermittelt werden, sowie ein Bussystem der Elektroinstallation.

## Beschreibung

Die Erfindung betrifft ein busfähiges Steuerungsgerät zur Steuerung mindestens eines Verbrauchers in einer busorientierten programmierbaren Elektroinstallation, mit einer Busanschlusseinrichtung zum Anschluss des Steuergerätes an ein Bussystem, und mit einer Steuerungseinrichtung zum Steuern des an das Steuerungsgerät angeschlossenen Verbrauchers, gemäß dem Oberbegriff des Anspruchs 1.

Die Erfindung betrifft weiter ein Verfahren zur Steuerung wenigstens eines Verbrauchers in einer busorientierten programmierbaren Elektroinstallation, wobei wenigstens ein busfähiges Steuerungsgerät mit einer Busanschlusseinrichtung an ein Bussystem angeschlossen ist, wobei der Verbraucher an das busfähige Steuerungsgerät angeschlossen ist, gemäß dem Oberbegriff des Anspruchs 8.

Weiterhin betrifft die Erfindung ein Bussystem der Elektroinstallation, welches mehrere verteilt angeordnete und über eine Busleitung verbundene busfähige Steuerungsgeräte zur Steuerung mindestens eines Verbrauchers umfasst, gemäß dem Oberbegriff des Anspruchs 14.

Ein gattungsgemäßes busfähiges Steuerungsgerät zur Steuerung mindestens eines Verbrauchers in einer busorientierten programmierbaren Elektroinstallation ist aus der DE 10 2006 061 137 A1 bekannt. Eine dort gezeigte Steuereinheit kann zur Realisierung einer Energieverbrauchskontrolle, beispielsweise in Gebäuden, Produktionsanlagen, Automatisierungsanlagen oder ähnlich komplexen Anlagen, die über einen Datenbus oder ein Kommunikationsnetz verfügen, eingesetzt werden. Derartige gattungsgemäße busfähige Steuerungsgeräte sind insbesondere auf dem Gebiet der Gebäudetechnik bekannt. Es handelt sich meistens um Geräte, die eine Vielzahl von Funktionsmodulen aufweisen, die beispielsweise auf der Grundlage von KNX Daten austauschen. KNX ist ein offener Standard für die Gebäudeautomatisierung und standardisiert nach EN50090 und ISO/IEC 14543. Der KNX Standard beschreibt die Übertragung von Steuerdaten über verschiedene Medien. Die Einsatzmöglichkeiten der verschiedenen Medien von KNX (Twisted Pair, Powerline, und Funk) orientieren sich dabei an den Anforderungen bzw. Gegebenheiten typischer Gebäude. Ein gattungsgemäßes busfähiges Steuerungsgerät kann auch zum Anschluss an ein anderes Local Area Network, LAN abgekürzt, eingerichtet sein, beispielsweise nach dem Ethernet-Standard. Gebäudeinstallationssysteme sind in der Regel dafür vorgesehen, eine Vielzahl von in Gebäuden installierten Busgeräten (Aktoren und Sensoren), wie Lampen, Antriebe, Fühler, Wächter, Schalter, Dimmer, Steller usw. sowie übergeordneten Steuergeräten einerseits mit der notwendigen Betriebsspannung zu versorgen und andererseits datentechnisch miteinander zu vernetzen. Es sind bereits Gebäudeinstallationssysteme bekannt, die zwei Bussysteme aufweisen, wobei dann eintreffende Informationen des ersten Bussystems in übertragbare Befehle des zweiten Bussystems bzw. umgekehrt umgesetzt werden können.

Das aus der DE 10 2006 061 137 A1 bekannte Steuerungsgerät verwendet Parameter, die dem Steuergerät zur Verfügung stehen, zur Ableitung von Verbrauchsdaten. Solche Parameter sind beispielsweise die dem Verbraucher zur Verfügung gestellte Betriebsspannung, oder der von einer Stromversorgung dem Verbraucher zur Verfügung gestellte Strom, oder sogenannte boolsche Parameter, wie beispielsweise Ein/Aus - Zustände, die zusammen mit einer Zeiterfassung die Ermittlung der Einschaltzeiten und damit eine Abschätzung des Energieverbrauchs erlauben. Jedoch sind die so ermittelbaren elektrischen Verbrauchsdaten eher ungenaue Schätzungen, keine exakt ermittelten Werte und daher beispielsweise für Abrechnungszwecke unbrauchbar.

Darüber hinaus sind busfähige elektrische Energieverbrauchszähler bekannt, die jedoch nur die elektrische Energie in einem ihnen zugeordneten Stromkreis mit mehreren Verbrauchern summarisch messen, aber nicht einzelne Verbraucher individuell erfassen. Grundsätzlich ist es zwar möglich, beispielsweise bei größeren Stromkreisen zusätzliche Stromzähler für jeden einzelnen Verbraucher einzusetzen, deren Stromwerte über einen zentralen Rechner oder eine zentrale Einheit erfasst und anschließend bearbeitet werden. Dies ist jedoch sehr teuer und aufwändig, da fernauslesbare Stromzähler teuer sind. Zudem ist es aufgrund der Vielzahl der Steuereinheiten, die innerhalb eines Datennetzes einer busorientierten programmierbaren Elektroinstallation vorhanden sind, wie beispielsweise INSTABUS- oder KNX-Aktoren, extrem aufwendig, zu den ohnehin schon komplexen Steuereinheiten zusätzlich einen oder mehrere Stromzähler vorzusehen. Des weiteren können derartige Energieverbrauchszähler keine einzelnen Verbraucher bedarfs- bzw. verbrauchsabhängig zu- oder abschalten.

Es ist daher die Aufgabe der vorliegenden Erfindung, ein gattungsgemäßes busfähiges Steuerungsgerät so weiterzubilden, dass es zur einfachen und kostengünstigen Erfassung des elektrischen Energieverbrauchs von mindestens einem durch das busfähige Steuerungsgerät gesteuerten Verbrauchers verwendbar ist.

Es ist weiterhin die Aufgabe der vorliegenden Erfindung, ein Verfahren zur Steuerung wenigstens eines Verbrauchers in einer busorientierten programmierbaren Elektroinstallation, anzugeben, mit dem auf einfache und kostengünstige Weise der elektrische Energieverbrauch des mindestens einen Verbrauchers ermittelt werden kann.

Schließlich ist es eine weitere Aufgabe der vorliegenden Erfindung, ein Bussystem der Elektroinstallation zu schaffen, in dem auf einfache und kostengünstige Weise der elektrische Energieverbrauch von mindestens einem Verbraucher ermittelt werden kann.

Die Aufgabe bezüglich der Schaffung eines busfähigen Steuerungsgerätes, wird durch ein Steuerungsgerät mit den Merkmalen des Anspruchs 1 gelöst.

Die Aufgabe bezüglich der Schaffung eines Verfahrens zur Steuerung wenigstens eines Verbrauchers in einer busorientierten programmierbaren Elektroinstallation wird durch ein Verfahren nach Anspruch 8 gelöst.

Die Aufgabe bezüglich der Schaffung eines Bussystems der Elektroinstallation wird durch ein Bussystem mit den Merkmalen des Anspruchs 14 gelöst.

Erfindungsgemäß umfasst also das Steuerungsgerät eine Erfassungseinrichtung zum Erfassen von Strom und Spannung des Verbrauchers sowie eine Auswerteeinheit zur Verarbeitung der erfassten Strom- und Spannungswerte oder zur Ermittlung von sonstigen Kennwerten daraus.

Ein erfindungsgemäßes Steuerungsgerät kann somit den Strom und die Spannung des angeschlossenen Verbrauchers direkt ermitteln. Damit kann in der Auswerteeinheit die momentan vom Verbraucher verbrauchte Leistung und davon abgeleitet der Energieverbrauch ermittelt werden. Es ist kein gesonderter fernauslesbarer Stromzähler dazu erforderlich. Die Leistungs- und Energieverbrauchswerte können von dem erfindungsgemäßen Steuerungsgerät im Rahmen der normalen Informations- und Befehlsübertragung innerhalb des Gebäudebussystems an andere Geräte übermittelt werden zu Auswerte- und Anzeigezwecken, beispielsweise an einen übergeordneten Steuerrechner. Die erfindungsgemäß vorgesehene Erfassungseinrichtung für Strom und Spannung kann dabei eine aus elektronischen Stromzählern bekannte Strom- und Spannungsmessvorrichtung sein, beispielsweise ein Halleffektbasierter Stromsensor und ein Messwiderstand zur Erfassung der Spannung.

Gemäß einer vorteilhaften Ausführungsform der Erfindung sind zur Steuerung mehrerer Verbraucher mehrere Erfassungseinrichtungen vorgesehen, wobei jeder angeschlossene Verbraucher einer der Erfassungseinrichtungen zugeordnet ist. In dieser Ausführungsform ist das Steuerungsgerät mehrkanalig ausgeführt, und es ist jedem Kanal eine Erfassungseinrichtung zum erfassen von Strom und Spannung zugeordnet.

Durch die Erfassung von Strom- und Spannungsverlauf an jedem angeschlossenen Verbraucher kann die Auswerteeinheit so eingerichtet sein, dass sie verschiedene Kennwerte aus den Strom- und Spannungswerten bzw. Strom- und Spannungsverläufen ermittelt. Die Auswerteeinheit kann für diesen Zweck beispielsweise einen Mikroprozessor mit einem Anwendungsprogramm zur Signalanalyse und zur Ermittlung der gewünschten Kennwerte umfassen.

Gemäß einer vorteilhaften Ausführungsform der Erfindung ist die Auswerteeinheit zur Bestimmung des Strom- und/oder Spannungseffektivwertes an wenigsten einem Verbraucher eingerichtet.

Gemäß einer weiteren vorteilhaften Ausführungsform der Erfindung ist die Auswerteeinheit zur Bestimmung der Wirkleistung und/oder der Scheinleistung und/oder der Gesamtblindleistung an wenigstens einem Verbraucher eingerichtet.

Gemäß einer weiteren vorteilhaften Ausführungsform der Erfindung ist die Auswerteeinheit zur Bestimmung des Energieverbrauchs und/ oder von Lastkurven wenigstens eines Verbrauchers eingerichtet.

Gemäß einer weiteren vorteilhaften Ausführungsform der Erfindung ist die Auswerteeinheit zur Bestimmung des Crest-Faktors des Stromes und/oder der Spannung und/oder des Stromoberwellengehaltes an wenigstens einem Verbraucher eingerichtet. Der Crest-Faktor bezeichnet dabei das Verhältnis zwischen dem Scheitelwert und dem Effektivwert einer Wechselgröße, hier also der Spannung oder des Stromes des Verbrauchers.

Eine weitere vorteilhafte Ausführungsform der Erfindung sieht die Verwendung von zusätzlichen Logikfunktionen und Vergabe von Prioritäten vor, so dass einzelne Verbraucher zeit-, bedarfs- oder lastabhängig, oder sogar von dem Energieversorger nach Tarifzeitumschaltungen gesteuert werden können. Die zusätzliche Logik- und Prioritätssteuerung kann dabei in dem busfähigen Steuerungsgerät selbst integriert sein. Das busfähige Steuerungsgerät kann beispielsweise einen Mikroprozessor umfassen, in dem ein Anwendungsprogramm gespeichert ist und ausgeführt wird. Die zusätzliche Logik- und Prioritätssteuerung kann dann beispielsweise als Programmmodul in dem Anwendungsprogramm des Mikroprozessors ausgeführt sein. Dazu ist ein busfähiges Steuerungsgerät in einer weiteren sehr vorteilhaften Ausführungsform der Erfindung also **dadurch gekennzeichnet, dass** die Steuerungseinrichtung eine Logik-und Prioritätssteuerungseinheit umfasst zur zeit- und/oder bedarfs- und/oder lastabhängigen Steuerung des oder der angeschlossenen Verbraucher.

Die zusätzliche Logik- und Prioritätssteuerung kann allerdings auch durch ein zusätzliches Gerät realisiert sein, das an das busfähige Steuerungsgerät angeschlossen ist. Das zusätzliche Gerät kann auch ebenfalls an den Bus der Elektroinstallation angeschlossen sein, entweder über eine eigene Busanschlusseinrichtung oder über das busfähige Steuerungsgerät.

Ein erfindungsgemäßes Verfahren zur Steuerung wenigstens eines Verbrauchers in einer busorientierten programmierbaren Elektroinstallation, wobei wenigstens ein busfähiges Steuerungsgerät mit einer Busanschlusseinrichtung an ein Bussystem angeschlossen ist, wobei der Verbraucher an das busfähige Steuerungsgerät angeschlossen ist, ist **dadurch gekennzeichnet, dass** in dem busfähigen Steuerungsgerät mit einer Erfassungseinrichtung Strom und Spannung des Verbrauchers erfasst und verarbeitet werden, und dass vorwählbare Kennwerte aus den verarbeiteten Strom- und Spannungswerten ermittelt werden.

Gemäß einer vorteilhaften Ausführungsform des erfindungsgemäßen Verfahrens wird aus den Strom- und Spannungswerten der Strom- und/oder Spannungseffektivwert an wenigstens einem Verbraucher ermittelt.

Gemäß einer weiteren vorteilhaften Ausführungsform des erfindungsgemäßen Verfahrens wird aus den Strom- und Spannungswerten die Wirkleistung und/oder Scheinleistung und/oder Gesamtblindleistung an wenigsten einem Verbraucher ermittelt.

Gemäß einer weiteren vorteilhaften Ausführungsform des erfindungsgemäßen Verfahrens werden aus den Strom- und Spannungswerten der Energieverbrauch und/ oder Lastkurven wenigstens eines Verbrauchers ermittelt.

Gemäß einer weiteren vorteilhaften Ausführungsform des erfindungsgemäßen Verfahrens wird aus den Strom- und Spannungswerten der Crest-Faktor des Stromes und/oder der Spannung und/oder der Stromoberwellengehalt an wenigstens einem Verbraucher ermittelt.

Gemäß einer weiteren vorteilhaften Ausführungsform des erfindungsgemäßen Verfahrens wird aus den ermittelten Schein- und Wirkleistungswerten der Leistungsfaktor an wenigstens einem Verbraucher ermittelt.

Gemäß einer weiteren vorteilhaften Ausführungsform des erfindungsgemäßen Verfahrens wird wenigstens ein Verbraucher zeit- und/oder bedarfs- und/oder lastabhängig gesteuert.

Ein erfindungsgemäßes Bussystem umfasst mehrere verteilt angeordnete und über eine Busleitung verbundene busfähige Steuerungsgeräte zur Steuerung mindestens eines Verbrauchers, wobei wenigstens eines der Steuerungsgeräte eine Erfassungseinrichtung zum Erfassen von Strom und Spannung des Verbrauchers sowie eine Auswerteeinheit zur Verarbeitung der erfassten Strom- und Spannungswerte aufweist.

Ein erfindungsgemäßes busfähiges Steuerungsgerät ist dazu eingerichtet, um die Mess- und Auswertedaten von der Auswerteeinheit über ein Kommunikationsnetz, beispielsweise KNX, LAN, Ethernet etc zum Zwecke einer übergeordneten Auswertung oder Anzeige zu übertragen. Zu diesem Zweck umfasst gemäß einer vorteilhaften Ausführungsform der Erfindung das Bussystem eine Steuer-und Anzeigestation zur Auswertung und/oder Anzeige der erfassten Strom- und Spannungswerte oder der in der Auswerteeinheit daraus ermittelten Kennwerte.

### Figurenbeschreibung

Figuren und Beschreibung dienen dem besseren Verständnis des Gegenstands. Gegenstände oder Teile von Gegenständen, die im Wesentlichen gleich oder ähnlich sind, können mit denselben Bezugszeichen versehen sein. Die Figuren sind lediglich eine schematische Darstellung einer Ausführungsform der Erfindung.

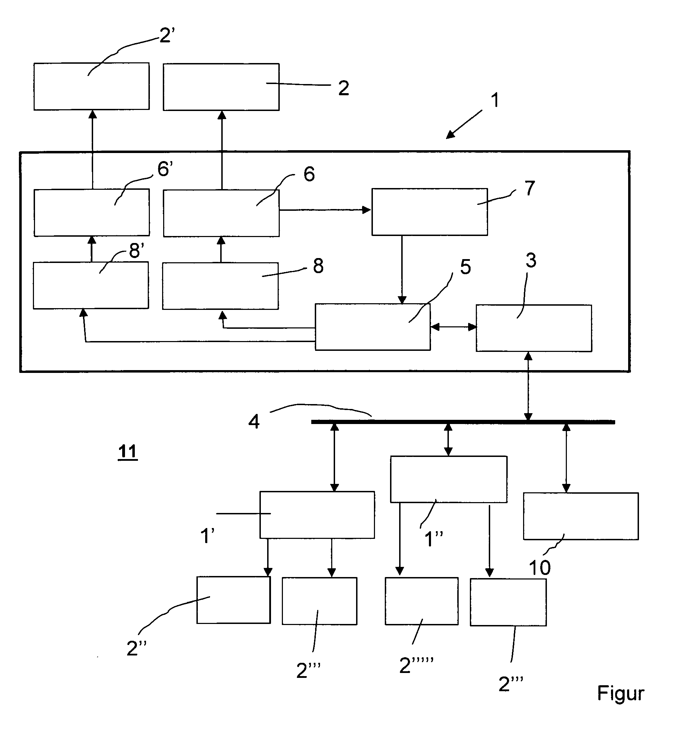

Dabei zeigt:
- die einzige Figur: ein Schema eines erfindungsgemäßen Bussystems mit einem Schaltschema eines erfindungsgemäßen Busgerätes

Die einzige Figur zeigt schematisch ein Bussystem 11 der Gebäudeinstallation mit einer Busleitung 4, an die busfähige Steuerungsgeräte 1, 1', 1" und eine Steuer- und Anzeigestation 10 angeschlossen sind. Bei dem Bussystem kann es sich beispielsweise um ein in der Gebäudetechnik standardisiertes Bussystem wie KNX/EIB oder LON handeln.

An die Busleitung 4 sind exemplarisch drei busfähige Steuerungsgeräte 1, 1', 1" angeschlossen, es können in einer komplexeren Anlage selbstverständlich auch mehr sein. An jedes Steuerungsgerät 1, 1', 1" sind hier exemplarisch zwei Lasten 2, 2', 2", 2"', 2"", 2""' angeschlossen. Die Lasten werden in dem Bussystem über die Busleitung 4 durch die Steuerungsgeräte geschaltet.

Exemplarisch ist für das Steuerungsgerät 1 in einem Blockschaltbild der innere funktionale Aufbau dargestellt. Ein Steuerungsgerät 1 hat eine Busanschlusseinrichtung 3, auch Buskoppler genannt, zur Herstellung der Verbindung mit der Busleitung und zur Abwicklung der Buskommunikation anhand des jeweiligen Busübertragungsprotokolls. Die Signale gelangen von der Busanschlusseinrichtung 3 zu einer Steuereinrichtung 5, welche die Ansteuerung der angeschlossenen Lasten übernimmt.

Lasten können beispielsweise Lampen, Antriebe, Steller etc. sein. Wenn die Last beispielsweise eine Lampe oder ein Antrieb ist, verbraucht sie im Betrieb elektrische Energie und wird dann als Verbraucher 2, 2' 2", 2"', 2"" bezeichnet.

Zur Ansteuerung eines Verbrauchers umfasst das Steuerungsgerät 1 ein Schaltelement 8 für jeden anzusteuernden Verbraucher, also für jeden Kanal. Ein Schaltelement 8 kann beispielsweise ein Halbleiterschalter, Dimmstufe oder ein Relais sein, welches auf ein Signal von der Steuerungseinrichtung 5 hin den Stromkreis zu dem Verbraucher 2, 2' ganz oder teilweise öffnet oder schließt.

In dem Stromkreis jedes Kanals befindet sich zwischen dem Schaltelement 8 und dem Verbraucher 2, 2' eine Erfassungseinrichtung 6, 6' zur Erfassung des elektrischen Stroms und der Spannung, die an den Verbraucher 2, 2' angelegt sind bzw. zu ihm fließen. Für jeden Kanal des Steuerungsgerätes 1 ist eine Erfassungseinrichtung vorhanden. Eine Erfassungseinrichtung als solche ist im Prinzip bekannt. Es kann sich beispielsweise um einen bekannten Stromsensor und einen Messwiderstand zur Erfassung des Spannungsabfalls handeln.

Die Signale der Erfassungseinrichtungen 6, 6' werden zu einer Auswerteeinheit 7 geleitet. Dort werden sie be- und verarbeitet. Neben Signalbearbeitung wie beispielsweise Glättung, Filterung etc. werden die Signale der gemessenen Strom- und Spannungswerte verarbeitet zur Bestimmung von abgeleiteten Größen oder Kennwerten, wie beispielsweise Strom- oder Spannungseffektivwert, Wirkleistung, Scheinleistung, Gesamtblindleistung, Energieverbrauch, Crest-Faktor, Stromoberwellengehalt, Lastkurven, Leistungsfaktor. Die Bedeutung jedes dieser Kennwerte ist im Prinzip bekannt und kann zur Charakterisierung, Überwachung oder Steuerung des Verbrauchers mit herangezogen werden.

Die Auswerteeinheit 7 leitet die Kennwerte an die Steuereinrichtung 5, von wo aus sie über die Buskoppeleinrichtung 3 über die Busleitung 4 an eine Steuer- und Anzeigestation 10 übertragen werden, zum Zwecke einer übergeordneten Auswertung oder Anzeige. Selbstverständlich könnte auch das Steuerungsgerät 1 selbst zusätzlich noch ein Anzeigemodul (nicht dargestellt) haben, so dass die entsprechende Kenngröße an dem Steuerungsgerät 1 selbst auch angezeigt und abgelesen werden kann.

Die Steuereinrichtung 5 kann eine zusätzliche Logik- und Prioritätssteuerung umfassen, mit deren Hilfe einzelne Verbraucher zeit-, bedarfs-, lastabhängig oder sogar vom Energielieferanten nach Tarifzeitumschaltungen gesteuert werden können.

Für alle Steuerungsaufgaben kann die Steuereinrichtung 5 über den Bus konfiguriert und parametrisiert werden.

Der im Blockschaltbild dargestellte funktionale Aufbau des Steuerungsgerätes 1 kann durch eine elektronische Schaltung realisiert sein, die einen oder mehrere Mikroprozessoren umfasst, in dessen Anwendungsprogramm einige der Funktionen als Programmmodule realisiert sind. Dazu zählen beispielsweise die Funktionen der Auswerteeinheit 7 und der Steuereinrichtung 5, und auch teilweise die Busankopplung 3.

### Bezugszeichenliste

- 1: busfähiges Steuerungsgerät
- 1': busfähiges Steuerungsgerät
- 1": busfähiges Steuerungsgerät
- 2: Last, Verbraucher
- 2': Last, Verbraucher
- 3: Busanschlusseinrichtung
- 4: Busleitung
- 5: Steuereinrichtung
- 6: Erfassungseinrichtung
- 6': Erfassungseinrichtung
- 7: Auswerteeinheit
- 8: Schaltelement
- 8': Schaltelement
- 10: Steuer- und Anzeigestation
- 11: Bussystem

## Patentansprüche

1. Busfähiges Steuerungsgerät (1) zur Steuerung mindestens eines Verbrauchers (2) in einer busorientierten programmierbaren Elektroinstallation, mit einer Busanschlusseinrichtung (3) zum Anschluss des Steuergerätes (1) an ein Bussystem (4), und mit einer Steuerungseinrichtung (5) zum Steuern des an das Steuerungsgerät (1) angeschlossenen Verbrauchers (2),
**dadurch gekennzeichnet, dass** das Steuerungsgerät (1) eine Erfassungseinrichtung (6) zum Erfassen von Strom und Spannung des Verbrauchers (2) sowie eine Auswerteeinheit (7) zur Verarbeitung der erfassten Strom- und Spannungswerte oder zur Ermittlung von Kennwerten aus den erfassten Strom- und Spannungswerten umfasst.

2. Busfähiges Steuerungsgerät (1) nach Anspruch 1, **dadurch gekennzeichnet, dass** mehrere Erfassungseinrichtungen (6, 6') zur Steuerung mehrerer Verbraucher (2, 2') vorgesehen sind, wobei jeder angeschlossene Verbraucher (2, 2') einer der Erfassungseinrichtungen (6, 6') zugeordnet ist.

3. Busfähiges Steuerungsgerät (1) nach Anspruch 1, **dadurch gekennzeichnet, dass** mehrere Schaltelemente (8, 8') zum bedarfs- und verbrauchsabhängigen Schalten mehrerer Verbraucher (2, 2') vorgesehen sind.

4. Busfähiges Steuerungsgerät (1) nach einem der Ansprüche 1 bis 3, **dadurch gekennzeichnet, dass** die Auswerteeinheit (7) zur Bestimmung des Strom- und/oder Spannungseffektivwertes und/oder des Leistungsfaktors und/oder des Crest-Faktors des Stromes und/oder der Spannung und/oder des Stromoberwellengehaltes an wenigsten einem Verbraucher (2, 2') eingerichtet ist.

5. Busfähiges Steuerungsgerät (1) nach einem der Ansprüche 1 bis 3, **dadurch gekennzeichnet, dass** die Auswerteeinheit (7) zur Bestimmung der Wirkleistung und/oder der Scheinleistung und/oder der Gesamtblindleistung an wenigstens einem Verbraucher (2, 2') und /oder des Energieverbrauchs und/ oder von Lastkurven wenigstens eines Verbrauchers (2, 2') eingerichtet ist.

6. Busgerät nach Anspruch 1, **dadurch gekennzeichnet, dass** die Steuerungseinrichtung (5) eine Logik- und Prioritätssteuerungseinheit umfasst zur zeit- und/oder bedarfs- und/oder lastabhängigen Steuerung des oder der angeschlossenen Verbraucher (2, 2').

7. Verfahren zur Steuerung wenigstens eines Verbrauchers (2, 2') in einer busorientierten programmierbaren Elektroinstallation, wobei wenigstens ein busfähiges Steuerungsgerät (1) mit einer Busanschlusseinrichtung (3) an ein Bussystem (4) angeschlossen ist, wobei wenigsten ein Verbraucher (2, 2') an das busfähige Steuerungsgerät (1) angeschlossen ist, **dadurch gekennzeichnet, dass** in dem busfähigen Steuerungsgerät (1) mit einer Erfassungseinrichtung (6) Strom und Spannung wenigstens eines Verbrauchers (2, 2') erfasst und verarbeitet werden, und dass vorwählbare Kennwerte aus den verarbeiteten Strom- und Spannungswerten ermittelt werden.

8. Verfahren nach Anspruch 7, **dadurch gekennzeichnet, dass** aus den Strom- und Spannungswerten der Strom- und/oder Spannungseffektivwert und/oder die Wirkleistung und/oder Scheinleistung und/oder Gesamtblindleistung und/oder der Crest-Faktor des Stromes und/oder der Spannung und/oder der Stromoberwellengehalt an wenigstens einem Verbraucher (2, 2') und/oder der Energieverbrauch und/ oder Lastkurven wenigstens eines Verbrauchers (2, 2') ermittelt werden.

9. Verfahren nach Anspruch 7, **dadurch gekennzeichnet, dass** wenigstens ein Verbraucher (2, 2') zeit- und/oder bedarfs- und/oder lastabhängig gesteuert wird.

10. Bussystem der Elektroinstallation, welches mehrere verteilt angeordnete und über eine Busleitung verbundene busfähige Steuerungsgeräte (1) zur Steuerung mindestens eines Verbrauchers (2) umfasst, **dadurch gekennzeichnet, dass** wenigstens eines der Steuerungsgeräte eine Erfassungseinrichtung zum Erfassen von Strom und Spannung des Verbrauchers sowie eine Auswerteeinheit zur Verarbeitung der erfassten Strom- und Spannungswerte oder zur Ermittlung von Kennwerten aus den erfassten Strom- und Spannungswerten aufweist.

11. Bussystem der Elektroinstallation nach Anspruch 14, **dadurch gekennzeichnet, dass** das Bussystem eine Steuer-und Anzeigestation (10) umfasst zur Auswertung und/oder Anzeige der erfassten Strom- und Spannungswerte oder von daraus ermittelten Kennwerten.
